**Europäisches Patentamt**

**European Patent Office**

**Office européen des brevets**

(19)

(11) Numéro de publication: **0 099 833**
**B1**

(12) ## FASCICULE DE BREVET EUROPEEN

(45) Date de publication du fascicule du brevet:
**14.05.86**

(21) Numéro de dépôt: **83401487.0**

(22) Date de dépôt: **20.07.83**

(51) Int. Cl.⁴: **C 10 J 3/48,** C 10 J 3/56,
C 10 J 3/74, C 10 J 3/86,
B 01 J 8/18

(54) **Dispositif de conversion et de récupération d'énergie thermique.**

(30) Priorité: **21.07.82 FR 8212702**

(43) Date de publication de la demande:
**01.02.84 Bulletin 84/5**

(45) Mention de la délivrance du brevet:
**14.05.86 Bulletin 86/20**

(84) Etats contractants désignés:
**AT BE CH DE FR GB IT LI LU NL SE**

(56) Documents cités:
**EP - A - 0 024 281**
**EP - A - 0 048 326**
**DE - A - 1 596 323**
**FR - A - 1 070 615**
**FR - A - 1 142 323**
**FR - A - 2 500 470**
**US - A - 2 594 329**
**US - A - 3 998 609**
**US - A - 4 272 255**

(73) Titulaire: **CREUSOT-LOIRE, 42 rue d'Anjou,
F-75008 Paris (FR)**

(72) Inventeur: **Morin, Jean-Xavier, 9 B rue de Nevers,
F-71200 Le Creusot (FR)**

(74) Mandataire: **Bressand, Georges et al, c/o CABINET
LAVOIX 2 Place d'Estienne d'Orves, F-75441 Paris
Cedex 09 (FR)**

## Description

L'invention a pour objet un dispositif de conversion et de récupération d'énergie thermique utilisable notamment dans la gazéification de matières combustibles.

On connaît un certain nombre de procédés permettant de convertir des combustibles solides en gaz par gazéification ou combustion, ainsi que des procédés de traitement de gaz à très haute température comme le réformage de gaz de synthèse par oxydation thermique, dans lesquels la réaction de conversion est réalisée dans une chambre de forme cylindrique garnie intérieurement de matériaux réfractaires et reliée à une chambre de récupération qui est parcourue par les gaz chauds chargés ou non en particules solides ou liquides et produit dans la chambre de conversion et qui contient un organe de récupération à grande surface d'échange tel qu'un réseau de tubes parcourus par un fluide caloporteur et chauffés par la circulation des gaz chauds.

Il est parfois avantageux de réaliser la réaction de conversion dans un lit fluidisé qui peut être du type dense ou circulant. Dans ce cas, le gaz produit par la réaction doit être acheminé dans la chambre de récupération en passant par un ou plusieurs séparateurs du genre cyclone placés à côté de la chambre de conversion. Les appareils sont reliés par des tuyauteries et l'ensemble doit être recouvert intérieurement d'un revêtement réfractaire.

On connaît dans le FR-A-1 070 615, un générateur de vapeur combiné à un appareil de production de gaz de synthèse comprenant une enveloppe allongée munie à son extrémité inférieure de moyens d'introduction d'un courant de produits gazeux de combustion à haute température, une chambre dans une zone intermédiaire de ladite enveloppe, destinée à recevoir les produits gazeux de combustion à son extrémité inférieure et comportant un débouché des gaz à son extrémité supérieure, et une section d'évaporation tubulaire disposée à l'intérieur de l'enveloppe dans une zone située au-dessus du débouché des gaz et recevant des gaz chauffants par ce débouché.

Il en résulte une construction assez compliquée, encombrante et onéreuse. En outre, la géométrie de ces appareils se prête mal à un fonctionnement sous pression qui est cependent souhaitable pour réaliser la réaction de conversion avec des capacités volumiques élevées.

On connaît également dans le EP-A-0 024 281 une installation dans laquelle la chambre de réaction et la chambre de récupération d'énergie sont placées l'une au-dessus de l'autre à l'intérieur d'une enceinte cylindrique de forme allongée susceptible de résister à la pression. La chambre de conversion, placée à la partie supérieure de l'enceinte, débouche dans un espace central en forme de couloir tubulaire placé dans l'axe de l'enceinte et qui peut limiter un espace annulaire parcouru en sens inverse par le courant de gaz, l'enemble constituant une chambre de récupération de chaleur. A cet effet, le couloir central est tapissé d'un faisceau de tubes parcourus par un fluide caloporteur et il doit avoir un diamètre assez important pour éviter que les cendres sortant avec les gaz de la chambre de conversion ne viennent au contact des tubes de récupération de chaleur, la longueur du couloir central étant, en outre, prévue de telle sorte que les cendres soient suffisamment refroidies à sa sortie. Une installation de ce genre est donc généralement très encombrante.

L'invention a pour objet de remédier à de tels inconvénients grâce à une nouvelle disposition plus compacte et favorisant l'évacuation des cendres. En outre, le dispositif selon l'invention se prête à de nombreux agencements permettant de l'adapter aux différents types de réactions connus.

Conformément à l'invention, la chambre de conversion occupe la totalité de l'espace central dont la hauteur limitée par les deux orifices d'extrémité correspond à la distance nécessaire au développement de la réaction de conversion et elle est entourée complètement par la chambre de récupération placée dans l'espace annulaire et avec laquelle elle communique par un intervalle circulaire dans lequel se produit la séparation des cendres entrainées avec les gaz issus de la conversion.

De la sorte, l'enceinte sous pression à l'intérieur de laquelle sont placées les deux chambres de conversion et de récuperation doit avoir une hauteur seulement un peu supérieure à celle de la chambre de conversion dont la paroi est munie sur sa face externe d'organes de récupération de la chaleur.

Dans un premier mode de réalisation, l'enceinte ayant un axe vertical et les moyens de production de la réaction étant placés à la partie supérieure de la chambre de conversion, les gas chauds descendent dans la chambre de conversion puis remontent dans la chambre de récupération, celle-ci étant munie d'au moins une tubulure d'évacuation desdits gaz placée à la partie supérieure de l'enceinte extérieure dont le fond inférieur a la forme d'une trémie de récupération des cendres munie dans son axe d'un orifice inférieur d'évacuation.

Dans un autre mode de réalisation, l'enceinte extérieure ayant un axe vertical, la réaction est produite dans une chambre placée à la partie inférieure de l'enceinte et débouchant vers le haut dans l'espace central limité par la paroi interne cylindrique, la paroi latérale de l'enceinte étant munie à sa partie inférieure d'un orifice d'évacuation des gaz produits par la réaction de conversion. De préférence, celle-ci est effectuée dans un lit fluidisé ménagé dans la chambre de réaction.

La caractéristique essentielle de l'invention réside donc dans l'association étroite de la chambre de conversion au centre de la chambre de récupération à l'intérieur d'une enceinte unique, de hauteur réduite, ce qui confère une compacité élevée à l'agencement. Du fait que la chambre de conversion communique avec la chambre de récupération annulaire par un espace circulaire avec changement de direction de l'écoulement gazeux, celui-ci passe radialement et à vitesse réduite d'une chambre à l'autre, ce qui facilite la séparation des cendres ou des particules solides du courant gazeux. La géométrie des équipements est idéale pour fonctionner à haute pression et haute température et l'agencement revendiqué est polyvalent puisqu'il permet de réaliser la réaction de conversion soit dans un brûleur soit dans un lit fluidisé qui peut être dense, circulant ou entrainé. D'autre part, la chambre de récupération peut fonctionner par rayonnement, par convection ou par conduction dans le cas de particules solides.

Dans le premier cas, la paroi interne est constituée au moins partiellement, du côté tourné vers la chambre de récupération, par un faisceau de tubes jointifs parcourus par un fluide caloporteur et il peut en être de même de la paroi latérale de l'enceinte extérieure, sur sa face interne tournée vers la chambre de récupération.

Mais l'espace annulaire constituant la chambre de récupération peut également être occupé par un réseau de tubes espacés parcourus par un fluide calopteur et qui peuvent être soit des tubes droits parallèles à l'axe soit des tubes enroulés en hélice, le transfert se faisant alors par convexion.

Enfin, on peut agencer la chambre de récupération selon le mode dit «de tubes de fumées» dans lequel les gaz circulent dans des tubes immergés dans le fluide caloporteur.

L'invention pourra être mieux comprise par la description détaillée qui va suivre de plusieurs modes de réalisation donnés à titre d'exemple et représentés sur les dessins annexés.

La fig. 1 est une vue schématique, en coupe axiale, d'un dispositif de conversion et de récupération d'énergie selon l'invention dans laquelle la réaction est produite par un brûleur à la partie supérieure de la chambre de conversion.

Les figures 2 et 3 sont des vues de détails de deux variantes de réalisation de la partie inférieure du dispositif.

La fig. 4 est une vue en coupe axiale d'un autre mode de réalisation de l'invention dans lequel la réaction exothermique est produite à la partie inférieure de la chambre de conversion.

La fig. 5 est une vue en coupe axiale d'un autre mode de réalisation dans lequel la réaction de conversion est produite dans un lit fluidisé du type dense.

Les figures 6 et 7 représentent deux autres agencements utilisant un lit fluidisé du type circulant.

La fig. 8 et la fig. 9 sont des vues en coupes axiales de deux modes de réalisation plus perfectionnés.

La fig. 10 indique de façon schématique divers modes d'association des dispositifs selon l'invention.

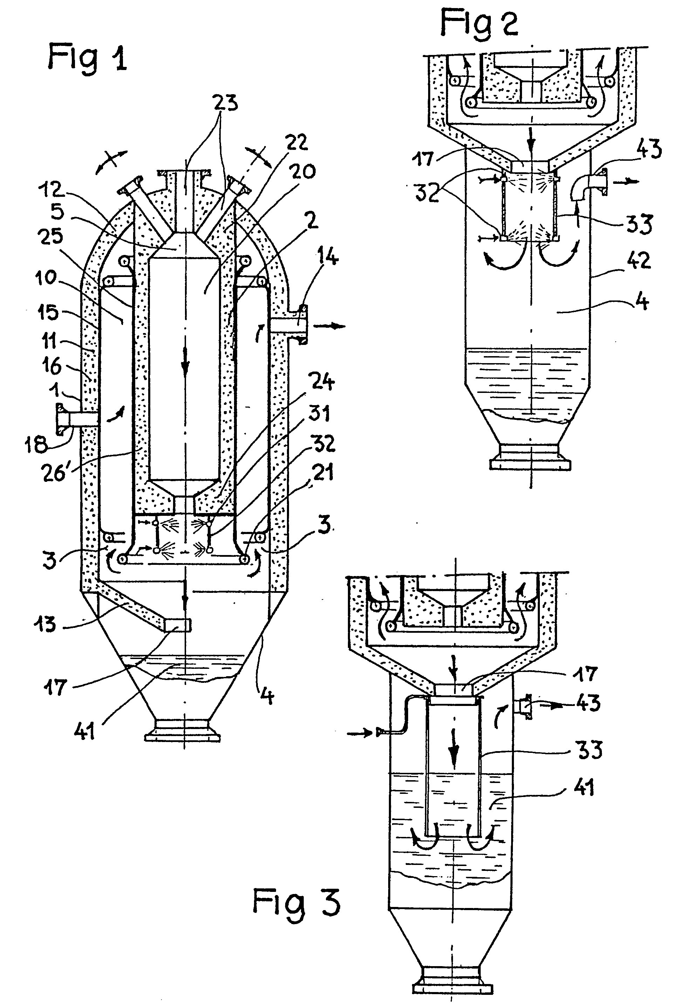

Sur la fig. 1, on a représenté un premier mode de réalisation de l'invention dans lequel la réaction exothermique est produite par un brûleur à la partie supérieure de la chambre de conversion et qui peut convenir particulièrement pour la gazéification du charbon à l'oxygène, à température de cendres liquides.

Comme on le voit, l'ensemble du dispositif est limité par une enceinte extérieure unique 1 constituée d'une paroi latérale cylindrique 11 fermée à ses extrémités par un fond supérieur 12 et par un fond inférieur 13.

A l'intérieur de l'enceinte 1 est placée une paroi interne cylindrique 2 de diamètre inférieur à celui de la paroi latérale 10 et s'étendant dans l'axe de l'enceinte 1 entre les deux fonds 12 et 13 de celle-ci sur une hauteur inférieure à la distance qui les sépare de façon que l'une des extrémités 21 de la paroi interne 2 soit séparée du fond correspondant 13 de l'enceinte 1 par un intervalle circulaire 3, alors que l'autre extrémité 22 de la paroi 2 peut être reliée à l'autre fond 12 de l'enceinte 1. La paroi interne 2 limite ainsi vers l'intérieur un espace central 20 et vers l'extérieur un espace annulaire 10 compris entre les parois 2 et 11 et qui communique avec l'espace central 20 par l'intervalle circulaire 3.

L'extrémité supérieure 22 de la paroi est fermée de façon à ménager à la partie supérieure de l'espace central 20 une chambre de réaction 5 dans laquelle débouchent un brûleur 23 ou bien des cannes d'injection de combustible et de comburant. On réalise ainsi dans la chambre de réaction 5 une réaction exothermique se développant dans l'espace central 20 qui constitue donc la chambre de conversion. Compte tenu de la nature de la matière et des conditions de fonctionnement, on peut déterminer la distance nécessaire au développement de la réaction et par conséquent la hauteur à donner à la paroi 2 pour que la réaction soit achevée à la sortie de l'espace central 20 qui est ainsi occupé entièrement par la chambre de conversion. Celle-ci est limitée à sa partie inférieure par un col 24 par lequel s'échappent les gaz chauds produits par la réaction et qui contournent le bord inférieur 21 de la paroi interne 2 en passant par l'espace annulaire 3 puis remontent à l'intérieur de l'espace annulaire 10 avant de s'échapper par une ou plusieurs tubulures d'évacuation 14 placées à la partie supérieure de l'enceinte extérieure 1 et reliées à un circuit aspirant. Une injection de gaz froid recyclé, par l'orifice 18, permet de maîtriser la température des gaz sortant du dispositif afin de resolidifier les dernières gouttelettes de cendres liquides qui auraient pu être entraînées par les gaz malgré leur changement de direction.

De la sorte on évite à coup sûr l'entrainement de cendres liquides dans les équipements placés en aval du dispositif.

L'espace annulaire 10 constitue la chambre de récupération d'énergie et, à cet effet, ses parois internes et externes sont tapissées de faisceaux de tubes 15 et 25 reliés à des collecteurs d'alimentation et d'évacuation d'un fluide caloporteur qui peuvent constituer les bords inférieur 21 et supérieur 22 de la paroi 2. Ces tubes peuvent être jointifs de façon à constituer une véritable paroi et, ainsi, le faisceau de tubes 25 peut constituer à lui seul la paroi interne 2 ou, en tout cas, sa face extérieure, la face intérieure étant recouverte d'un revêtement réfractaire 26 fixé sur les tubes 25.

De même, l'ensemble de la paroi interne de l'enceinte extérieure 1 peut être recouvert en cas de besoin, d'un revêtement réfractaire 16.

En outre, le fond inférieur 13 de l'enceinte est constitué par une paroi concave formant une trémie munie dans son axe d'un orifice inférieur 17 qui surmonte un bain de liquide ménagé dans le fond d'une cuve 4 dont les parois se raccordent au fond inférieur 13 de façon à constituer avec l'enceinte 1 un volume fermé dont les parois sont calculées pour résister à la pression qui doit être maintenue à l'intérieur de la chambre de conversion et qui règne dans l'ensemble de l'enceinte extérieure 1.

Les gaz produits par le brûleur traversent donc la chambre de conversion 2 en suivant une direction descendante parallèle à l'axe, passent dans l'intervalle circulaire 3 en suivant des directions radiales et remontent dans l'espace annulaire 10 qui, avec les organes d'échanges 15 et 25, constitue la chambre de récupération d'énergie, en suivant des directions ascendantes parallèles à l'axe. Il en résulte, dans l'intervalle circulaire 3, une diminution de vitesse des gaz propice à l'élimination des cendres qui descendent le long de la paroi conique 13 jusqu'à l'orifice 17 et tombent dans le bain de liquide 41. En outre, les gaz sortant de la chambre de conversion par l'orifice 24 peuvent être refroidis brutalement par injection d'un fluide de trempe transversale à l'axe au moyen de rampes d'aspersion 32 placées au-dessous de l'orifice inférieur 24. Il en résulte une granulation des cendres qui tombent directement par l'orifice 17 dans le bain de liquide 41.

Les rampes d'aspersion 32 peuvent avantageusement être placées le long d'un tube 33 placé dans l'axe pour canaliser les gaz et, selon une variante représentée sur les figures 2 et 3, le tube 33 peut être placé au-dessous de l'orifice inférieur 17 dans le prolongement de celui-ci. Dans ce cas, la paroi latérale 42 de la cuve 4 est munie à sa partie supérieure d'un orifice de sortie des gaz 43 et, en jouant sur les pertes de charge ou en reliant l'orifice 43 à un circuit d'aspiration, on peut faire passer avec les cendres, dans la cuve inférieure 4, une partie des gaz produits dans la chambre de conversion 20 qui seront évacués par l'orifice 43 après avoir subi une trempe sous l'action de l'eau pulvérisé par les rampes 32.

Dans une variante représentée sur la fig. 3, le tube 33 est prolongé de telle sorte que son extrémité inférieure plonge dans le bain de liquide 41. Les gaz passant dans l'orifice inférieur 17 barbotent alors dans le liquide 41 avant d'être aspirés par la buse 43 et se saturent en vapeur d'eau, ce qui peut être intéressant pour un traitement ultérieur.

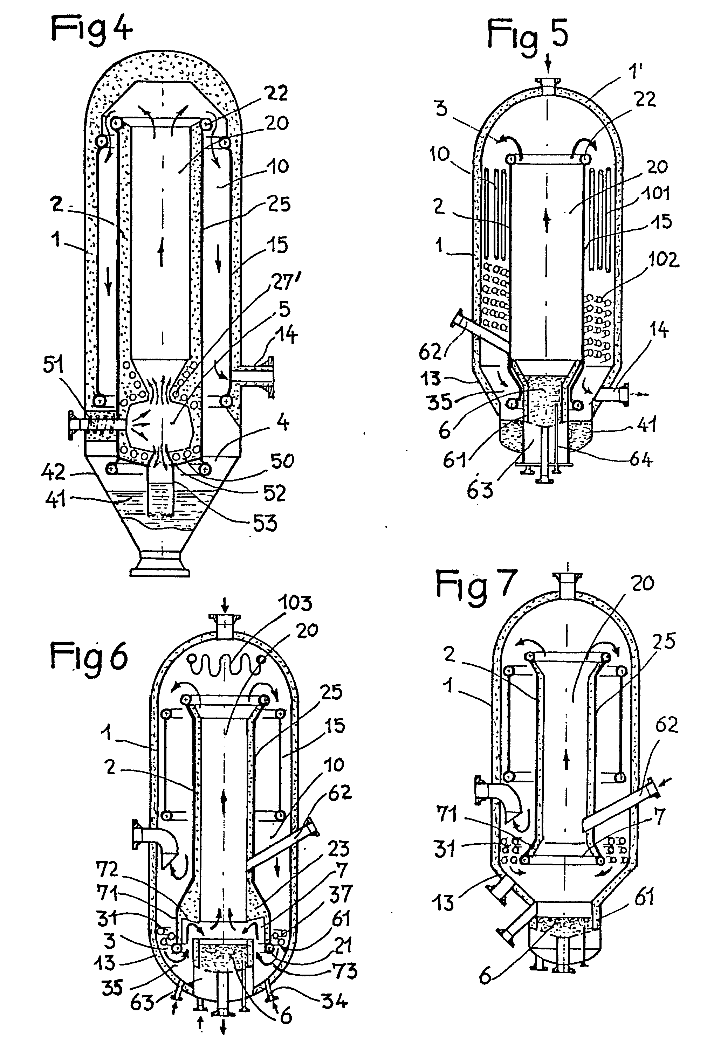

Dans un second mode de réalisation représenté sur la fig. 4, et qui peut convenir particulièrement au réformage da gaz de synthèse par oxydation thermique, la réaction exothermique est produite dans une chambre de réaction 5 placée à la partie inférieure de la chambre de conversion 20, celle-ci communiquant à sa partie supérieure avec la chambre de récupération 10. Dans ce cas la paroi interne 2 est fermée à son extrémité inférieure par un fond 50 placé dans l'axe et au-dessus du fond inférieur qui n'a pas besoin de revêtement réfractaire et peut être constitué simplement par la paroi 42 de la cuve 4 remplie de liquide 41.

Un rétrécissement 27' ménagé sur la face interne de la paroi 2 forme un col susceptible de limiter l'envoi des cendres et limite vers le haut la chambre 5 à l'intérieur de laquelle un dispositif d'alimentation tel qu'un brûleur 51 peut introduire par exemple un combustible tel que du charbon, de l'oxygène et de la vapeur d'eau dans le cas où le dispositif est utilisé pour la gazéification du charbon.

Les gaz chauds produits dans la chambre de réaction 5 passent dans le col 27' de maintien des cendres et remontent dans l'espace central 20 où se poursuit la réaction de conversion. Ils contournent l'extrémité supérieure 22 de la paroi interne 2 en suivant des directions radiales et redescendant en longeant les échangeurs 15 et 25 qui tapissent les parois de la chambre de récupération 10, pour s'échapper par la sortie 14 placée, dans ce cas, à la partie inférieure de l'enceinte extérieure 1.

Les cendres maintenues dans la chambre 5 par le col 27' sont évacuées par le fond 50 en forme de trémie, vers un orifice axial 52 débouchant dans un tube 53 qui plonge dans le bain de liquide 41.

Dans les modes de réalisation des figures 5 et suivantes, qui conviennent particulièrement à la gazéification du charbon à l'oxygène, en régime de cendres non fondues non collantes, la réaction de conversion est produite à l'intérieur d'un lit fluidisé 6 ménagé dans une chambre de fluidisation limitée par une paroi cylindrique 61 placée à l'extrémité inférieure de l'enceinte 1.

Dans le cas de la fig. 5, le lit fluidisé est du type dense, la fluidisation étant produite par un gaz introduit dans un plenum 63 ménagé dans le bas de la chambre 61 ou bien injecté par des cannes 64 à l'intérieur du lit fluidisé.

Les gaz formés dans le lit fluidisé qui, dans ce cas, est du type dense, remontent à l'intérieur de l'espace central 20 limité par la paroi interne 2 dont le bord supérieur 22 est écarté du fond supérieur 12 de l'enceinte par un intervalle circulaire 3 de passage des gaz vers la chambre de récuperation de chaleur 10.

Le fond inférieur 13 de l'enceinte 1 entoure la paroi 61 de la chambre de fluidisation 6 et forme autour de celle-ci un espace annulaire 35 qui peut constituer un bac rempli d'un bain de liquide 41 dans lequel tombent les cendres éventuellement entrainées dans l'espace 20 et qui s'échappent du courant de gaz au moment ou ceux-ci sortent par la tubulure 14 placée dans le bas de l'enceinte 1.

Lorsque le lit fluidisé est du type dense, la paroi interne 2 ne risque pas de se trouver au contact de cendres ou de particules solides très chaudes et elle peut donc être constituée uniquement par le faisceau de tube 15 sans interposition de réfractaire. L'échange de chaleur s'effectue alors par les deux faces de l'échangeur 15.

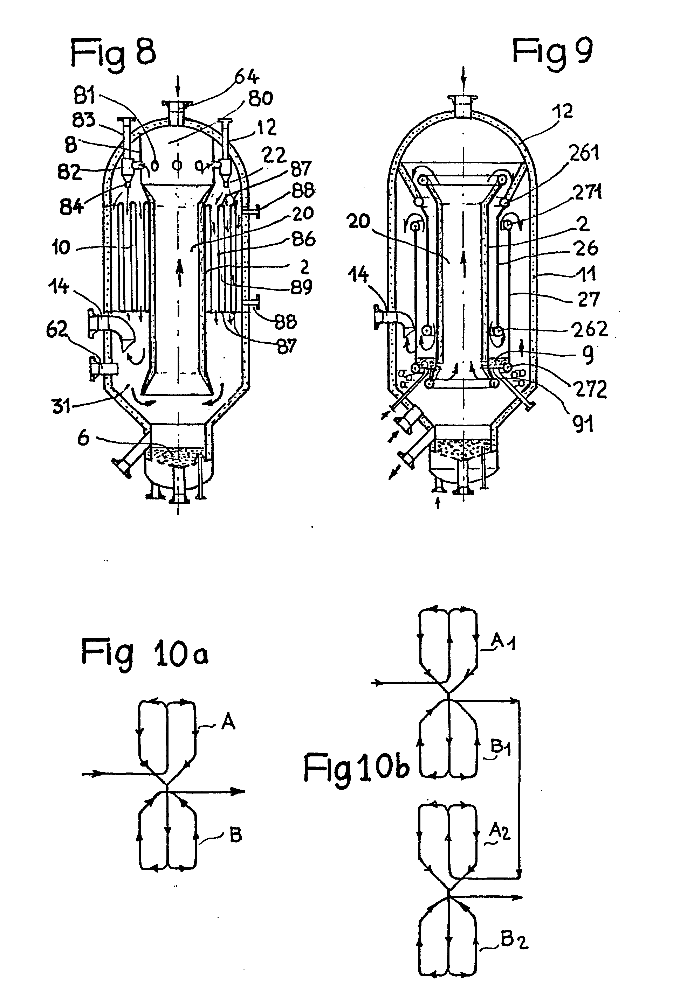

Selon des variantes représentées schématiquement sur la fig. 5, on peut aussi placer dans la chambre annulaire 10 de récupération de chaleur, un échangeur fonctionnant par convection et constitué d'un réseau de tubes droits 101 ou enroulés en hélice 102 qui remplissent l'espace annulaire 10 en nappes concentriques croisées ou non et qui laissent entre eux un passage pour les gaz.
Mais on peut aussi adopter un agencement du genre «tubes de fumées» représenté par exemple sur la fig. 8 dans lequel les gaz chauds circulent dans un ensemble de tubes immergés dans le fluide caloporteur.

Dune façon générale, on a le choix entre un échange de chaleur par rayonnement ou par convection, les deux systèmes pouvant d'ailleurs être utilisés simultanément.

Sur la fig. 6, on a représenté un autre exemple de réalisation dans lequel le moyen de production de la réaction exothermique est un lit fluidisé, celui-ci fonctionnant en lit circulant dans l'exemple représenté. Dans ce cas également, la chambre de fluidisation 6 limitée par la paroi latérale 61 est placée au centre du fond inférieur 13 de l'enceinte 1 et surmonte un plenum 63 dans lequel est introduit le gaz de fluidisation. Cependant, l'extrémité inférieure 23 de la paroi interne 2 est évasée de façon à former une hotte 7 recouvrant le lit fluidisé 6 et limitée extérieurement par une partie cylindrique 71 qui entoure la chambre de fluidisation 6 et descend jusqu'à un niveau inférieur au bord supérieur de la paroi cylindrique 61 de cette chambre. Normalement, le faisceau de tubes 25 qui tapisse la face extérieure de la paroi 3 recouvre également la hotte 7 dont le bord inférieur 21 peut être constitué par le collecteur d'alimentation en fluide caloporteur.

La paroi interne 72 de la hotte 7 peut avantageusement avoir la forme d'un tronc de cône ouvert vers le haut de façon à ménager, comme on l'a représenté sur la figure, un trajet en chicane suivant les flèches 73, ce qui diminue la vitesse des gaz et favorise la chate dans le lit fluidisé des particules entrainées avec les gaz. En effet, comme on l'a dit, le lit fluidisé 6 est réglé en lit circulant et des particules sont entrainées avec les gaz dans l'espace central 20 et redescendent dans la chambre de récupération 10. A la base de celle-ci, le fond inférieur 21 de la paroi 2 est séparé du fond inférieur 13 par un intervalle circulaire 3 de largeur réduite, de telle sorte que la paroi 71 de la hotte forme avec la paroi opposée de l'enceinte extérieure 1 une trémie annulaire 31 dans laquelle les particules entrainées se rassemblent par sédimentation puis passent par l'intervalle 3 pour tomber dans l'espace annulaire 35 compris entre la paroi 61 de la chambre de fluidisation 6 et le fond 13 de l'enceinte et dans lequel on peut injecter un gaz de reprise par des buses 34 pour favoriser la remontée des particules dans la hotte, celles-ci revenant ainsi dans le lit fluidisé en suivant les flèches 73.

On réalise ainsi une circulation en multipasse des particules dans le lit fluidisé 6 et dans la chambre de conversion 20 avec une sédimentation dans la trémie annulaire 31 dans laquelle se rassemblent les particules. Il peut être avantageux de placer dans cette trémie un réseau de tubes échangeurs 37 qui sont immergés ainsi dans les particules chaudes et se chauffent par conduction. Cette disposition permet également d'élargir l'intervalle 3 entre le bord inférieur 21 de la hotte et la paroi extérieure de l'enceinte, le passage des particules étant partiellement obturé par les tubes 32.

Sur la fig. 7, on a représenté un autre mode de réalisation dans lequel la paroi 61 de la chambre de fluidisation 6 est incorporée au fond inférieur 13 de l'enceinte extérieure 1, celui-ci étant constitué par une paroi conique qui ramène au lit fluidisé 6 les particules entrainées avec las gaz chauds dans l'espace central 20 et se rassemblant par sédimentation dans la trémie annulaire 31 limitée comme précédemment, par la paroi latérale de l'enceinte et par l'extrémité inférieure 71 de la paroi interne 2 qui s'évase de façon à former une hotte 7 au-dessus du lit fluidisé. Pour faciliter l'écoulement des particules à travers les tubes échangeurs 37, on peut les maintenir en fluidisation en injectant dans cette zone une faible quantité de gaz.

Dans le cas de la fig. 6 comme de la fig. 7, la paroi interne 2 est constituée par le faisceau de tubes 25 qui est ou non recouvert intérieurement d'un garnissage réfractaire selon la températur des gaz et des particules entrainées avec eux. Par exemple, un garnissage réfractaire sera nécessaire tout le long de la paroi interne 2 dans le cas où le dispositif est utilisé pour une gazéification mais il pourra être suffisante de recouvrir seulement la partie inférieure de la paroi interne 2 dans le cas où l'on produit simplement une combustion.

Dans les deux cas également la conduite d'alimentation 62 traverse la paroi latérale 11 de l'enceinte et la paroi interne 2 pour déboucher au-dessus du lit fluidisé 6. D'autre part, un organe d'échange 103 peut être disposé au sommet du dispositif.

La fig. 8 représente un perfectionnement apporté à la partie supérieure du dispositif qui convient spécialement lorsqu'on désire obtenir des gaz à haute température. Dans ce cas, l'extrémité supérieure 22 de la paroi interne 2 est reliée au fond supérieur 12 de l'enceinte par une paroi cylindrique 8 limitant un volume 80 dans lequel se rassemblent les gaz chauds sortant de la chambre de conversion 20 ceux-ci étant évacués par des orifices 81 ménagés dans la paroi 8 et qui débouchent dans une série de cyclones 82 disposés radialement. Dans ce cas, une partie des gaz à haute température est évacuée vers le haut par les cheminées 83 des cyclones, l'autre partie descendant avec les particules solides, par les sorties inférieures 84 des cyclones, dans l'espace annulaire 10. Dans l'exemple représenté, les gaz et les particules solides entrainées descendent dans des tubes verticaux 86 dont les extrémités sont fixées sur des plaques tubulaires 87 en forme d'anneaux, limitant avec les parois cylindriques 2 et 11 une chambre à convection 89 dans laquelle débouchent des tubulures 88 d'alimentation et d'évacuation d'un fluide caloporteur qui circule autour des tubes 86.

Comme précédemment, les particules solides se rassemblent dans les trémies annulaires 31 constituant le bas de la chambre de récupération alors que les gaz sont évacués par la tubulaire de sortie 14.

L'alimentation en matière peut se faire soit dans le lit fluidisé lui-même par une canne d'injection, soit au-dessus du lit fluidisé par une conduite 62 débouchant à l'intérieur de la chambre de conversion ou bien, comme on l'a représenté sur la fig. 8, au-dessus de la trémie annulaire 31. On peut également envisager, si les particules sont assez lourdes, une alimentation dans l'axe de la chambre de conversion 20 par une tubulure 64 traversant le fond supérieur 12 de l'enceinte, au sommet de celui-ci.

Dans les cas des figures 6, 7 et 8, on réalise donc une circulation en multipasse des particules pour obtenir par exemple une combustion ou une gazéification complète de celle-ci.

Mais on peut également envisager une circulation en multipasse des gaz pour obtenir une meilleure utilisation de leur énergie thermique, comme on l'a représenté sur la fig. 9.

La paroi interne 2 est alors entourée de plusieurs paroi intercalaires par exemple une première paroi 26 et une seconde paroi 27 dont les diamètres sont croissants de façon à s'enfiler les unes dans les autres.

L'extrémité supérieure 261 de la première paroi intercalaire 26 est reliée au fond supérieure 12 de l'enceinte de telle sorte que les gaz sortant vers le haut de l'espace central 20 soient déviés vers le bas pour passer entre les parois 2 et 26. Cette dernière s'arrête au-dessus de l'extrémité inférieure de la paroi 2 qui est reliée à l'extrémité inférieure 272 de la paroi 27 de façon à former une goulotte annulaire 9 dans laquelle se déposent les particules entrainées alors que les gaz contournent le bord inférieur 262 de la paroi 26, remontent entre les parois 26 et 27 puis contournent le bord supérieur 271 de cette dernière de façon à redescendre entre la paroi 27 et la paroi extérieure 11 pour être évacués par la tubulure 14. On a ainsi réalisé un trajet en labyrinthe des gaz entre les différentes paroi coaxiales, qui favorise l'échange de chaleur, les parois 26 et 27 étant bien entendu constituées, comme la paroi 2, de faisceaux de tubes jointifs, reliés à des collecteurs constituant les deux bords de la paroi.

Les particules qui se rassemblent dans la goulotte annulaire 9 ménagée entre les extrémités inférieures des paroi 2 et 27 peuvent redescendre dans le lit fluidisé mais on peut aussi, comme on l'a représenté sur la figure, faire déboucher dans le fond de la goulotte 9 des buses 91 par lesquelles on injecte un gaz de reprise des particules déposées, de façon que celles-ci remontent dans le circuit des gaz chauds.

On a ainsi décrit, avec plusieurs variantes, deux types de dispositifs selon l'invention dans lesquels la circulation à l'intérieur de l'espace central peut se faire soit vers le haut soit vers le bas. Dans certains cas il sera avantageux de réunir ces deux types d'appareils pour réaliser divers modes de circulation des gaz et des particules. Sur la fig. 10a on à schématisé par exemple l'association de deux enceintes, une enceinte supérieure A à circulation vers le haut et une enceinte inférieure B à circulation vers le bas.

Mais on pourrait également associer d'autres chambres superposées, la fig. 10b donnant par exemple un schéma d'un circuit à quatre modules A1 et B1, A2 et B2.

On voit que le dispositif qui vient d'être décrit est donc tout à fait polyvalent et pourra être utilisé dans tous les cas où l'on cherche à récupérer la chaleur produite par une réaction exothermique produisant des gaz chauds.

Mais les dispositions suivant l'invention présentent d'autres avantages qui sont apparus au cours de la description précédente et notamment:

—  une grande compacité des chambres de conversion de récupération d'énergie et, le cas échéant, de trempe,

—  une géometrie idéale pour fonctionner à haute température, la paroi résistant à la pression étant indépendente de la paroi interne qui limite la chambre de conversion,

—  une élimination facile des cendres liquides du courant gazeux,

—  une possibilité de recyclage des particules n'ayant pas complètement réagi,

—  la possibilité de refroidir les garnissages réfractaires.

Par ailleurs, il est évident que l'invention ne se limite pas aux seuls détails des modes de réalisation qui ont été décrits, bien d'autres variantes pouvant être imaginées en utilisant des moyens équivalents.

## Revendications

1. Dispositif de conversion et de récupération d'énergie thermique comprenant une chambre de conversion de forme cylindrique, munie à une extrémité de moyens de production d'une réaction exothermique dégageant des gaz à haute température et communiquant à son autre extrémité avec une chambre de récupération comprenant un organe de récupération de chaleur constitué d'au moins deux surfaces d'échange tubulaire coaxiales déterminant un espace central (20) et un espace annulaire (10) parcourus par des courants de gaz en sens inverse, l'ensemble étant placé à l'intérieur d'une enceinte extérieure (1) susceptible de résister à la pression et limitée par une paroi latérale cylindrique (11) fermée à ses extrémités par deux fonds, respectivement supérieur (12) et inférieur (13), caractérisé par le fait que la chambre de conversion occupe la totalité de l'espace central (20) dont la hauteur limitée par les deux orifices d'extrémité correspond à la distance nécessaire au développement de la réaction de conversion et est entouré complètement par la chambre de récupération placée dans l'espace annulaire (10), la chambre de conversion (20) communiquant avec la chambre de récupération (10) par un intervalle circulaire (3) dans lequel se produit la séparation des cendres entrainées avec les gaz issus de la conversion par inversion du sens du courant gazeux à la sortie de la chambre de conversion (20).

2. Dispositif de conversion et de récupération d'énergie selon la revendication 1, caractérisé par le fait qu'il comprend un moyen (18) d'injection, à l'intérieur de la chambre de récupération (10), d'un gaz refroidi pour le contrôle de la température des gaz sortant du dispositif.

3. Dispositif de conversion et de récupération d'énergie selon l'une des revendications 1 et 2, caractérisé par le fait que l'enceinte extérieure (1) ayant un axe vertical, les moyens de production de la réaction sont placés à proximité du fond supérieur (12), en haut de la chambre de conversion (20) et que la chambre de récupération (10) est munie, à sa partie supérieure, d'au moins une tubulure (14) d'évacuation les gaz produits par la réaction après circulation de haut en bas dans la chambre de conversion (20) et de bas en haut dans la chambre de récupération (10).

4. Dispositif de conversion et de récupération d'énergie selon l'une des revendications 1 et 2, caractérisé par le fait que, l'enceinte extérieure (1) ayant un axe vertical, les moyens de production de la réaction sont placées à proximité du fond inférieur (13), en bas de la chambre de conversion (20) et que la chambre de récupération (10) est munie à sa partie inférieure d'au moins une tubulure (14) d'évacuation des gaz produits par la réaction, après circulation de bas en haut dans la chambre de conversion (20) et de haut en bas dans la chambre de récupération (10).

5. Dispositif de conversion et de récupération d'énergie selon l'une des revendications 1 à 4, caractérisé par le fait que le fond inférieur (13) de l'enceinte est ouvert en forme de trémie de récupération des cendres.

6. Dispositif de conversion et de récupération d'énergie selon les revendications 3 et 5, caractérisé par le fait qu'il comprend une chambre fermée (4) de refroidissement des cendres remplie partiellement d'un bain liquide (41) et placée au-dessous inférieur (13) en forme de trémie, celle-ci étant muni dans son axe d'un orifice inférieur (17) d'évacuation des cendres débouchant au-dessus du bain liquide (41).

7. Dispositif de conversion et de récupération d'énergie selon la revendication 6, caractérisé par le fait qu'il comprend au moins une rampe d'aspersion (32) d'un fluide de trempe dans une direction transversale au trajet des cendres, placée à la sortie de la chambre de conversion (20) au-dessus du bain de liquide (41).

8. Dispositif de conversion et de récupération d'énergie selon l'une des revendications 6 et 7, caractérisé par le fait que la chambre de refroidissement (4) est munie à sa partie supérieure d'un orifice (43) d'évacuation d'une partie des gaz sortant de la chambre de conversion (20) et passant avec les cendres dans la chambre de refroidissement (4).

9. Dispositif de conversion et de récupération d'énergie selon la revendication 8, caractérisé par le fait que l'orifice inférieur (17) d'évacuation est prolongé vers le bas par un tube (33) s'étendant dans l'axe de la chambre de refroidissement et dont l'extrémité inférieure plonge dans le bain de liquide (41).

10. Dispositif de conversion et de récupération d'énergie selon la revendication 5, caractérisé par le fait que la partie inférieure du fond inférieur (13) en forme de trémie est remplie d'un bain liquide (41).

11. Dispositif de conversion et de récupération d'energie selon la revendication 4, caractérisé par le fait que la paroi interne (2) est fermée, à sa partie inférieure, par un fond (50) en forme de trémie muni en son centre d'un orifice (52) d'évacuation des cendres et est munie sur sa face interne d'un rétrécissement formant un col (27) de maintien des cendres, l'espace compris entre le fond (50) et le col (27) constituant une chambre de réaction (5) dans laquelle débouche un brûleur (51), la réaction de conversion se poursuivant au-dessus du col (27) jusqu'à la sortie de la chambre de conversion (20).

12. Dispositif de conversion et de récupération d'énergie selon la revendication 4, caractérisé par le fait que la réaction est produite dans un lit fluidisé ménagé à l'intérieur d'une chambre (6) placée au centre du fond inférieur (13) de l'enceinte (1) et limitée par une paroi cylindrique (61) disposée au-dessous et dans le prolongement de la paroi interne (2).

13. Dispositif de conversion et de récupération d'énergie selon les revendications 10 et 12, caractérisé par la fait que le fond inférieur (13) de l'enceinte extérieure (1) forme autour de la chambre de réaction (6) un espace annulaire (35) constituant au-dessous de la chambre de récupération (10) un bac rempli d'un liquide (41) de récupération des cendres entraînées vers les gaz.

14. Dispositif de conversion et de récupération d'énergie selon la revendication 12, caractérisé par le fait que l'extrémité inférieure de la paroi interne (2) s'évase vers le bas en formant au-dessus de la chambre de réaction (6) pour former une hotte (7) de guidage des gaz dont le bord inférieur (21) est séparé du fond inférieur (13) de l'enceinte extérieure (1) par un intervalle circulaire (3) et qui forme avec ledit fond inférieur (13) une trémie annulaire (31) de récupération des cendres, celles-ci étant recyclées dans la chambre de fluidisation (6) en passant par l'intervalle circulaire (3).

15. Dispositif de conversion et de récupération d'énergie selon les revendications 5 et 12, caractérisé par le fait que la chambre de fluidisation (6) est placée au fond de la trémie formée par le fond inférieur (13), celle-ci raccordant vers la haut au bord inférieur de la paroi latérale (11) de l'enceinte (1) et vers le bas, au bord supérieur de la paroi cylindrique (61) de la chambre de fluidisation (6).

16. Dispositif de conversion et de récupération d'énergie selon la revendication 14, caractérisé par le fait que la hotte (7) de guidage des gaz s'évase vers le haut puis se raccorde à une paroi cylindrique (71) entourant à une certaine distance la paroi cylindrique (61) de la chambre de fluidisation (6) jusqu'à un niveau inférieur au bord supérieur de celle-ci, de façon à former un trajet en chicane de renvoi vers la chambre de réaction (6) d'une partie des gaz venant de la chambre (10) de récupération de chalaur et ayant passé avec les cendres dans l'intervalle circulaire (3).

17. Dispositif de conversion et de récupération d'énergie selon l'une des revendications précédentes, caractérisé par le fait que la paroi interne (2) est constituée sur sa face extérieure tournée vers la chambre de récupération, par un faisceau (25) de tubes jointifs parcourus par un fluide caloporteur, la face interne, tournée vers la chambre de réaction, étant recouverte d'un revêtement réfractaire (26') fixé sur les tubes (25).

18. Dispositif de conversion et de récupération d'énergie selon l'une des revendications 1 à 17, caractérisé par le fait que la paroi interne (2) et la paroi latérale (11) de l'enceinte (1) sont reliées à leurs extrémités supérieure et inférieure par des plaques tubulaires (87) délimitant respectivement avec les fonds supérieur (12) et inférieur (13) deux chambres reliées entre elles par un faisceau de tubes (86) parcourus par les gaz produits par la réaction et disposés longitudinalement à l'intérieur de l'espace annulaire (10), celui-ci constituant une chambre fermée (89) parcourue par un fluide caloporteur dans lequel sont baignés les tubes du faisceau (86).

19. Dispositif de conversion et de récupération d'énergie selon les revendications précédentes, caractérisé par le fait que l'espace annulaire (10) constituant la chambre de récupération est divisé en au moins deux espaces coaxiaux par au moins une paroi intercalaire (26, 27) entourant la paroi interne et ménageant à l'intérieur de la chambre de récupération (10) un trajet en chicane longeant lesdites parois intercalaires (26, 27) en passant successivement dans lesdites espaces coaxiaux dans un sens puis dans l'autre.

20. Dispositif de conversion et de récupération d'énergie selon la revendication 19, caractérisé par le fait qu'il comprend une première et une seconde paroi intercalaires coaxiales (26 et 27) entourant la paroi interne (2), que la chambre de fluidisation (6) est placée à la partie inférieure de la paroi interne (2) et que celle-ci est reliée à la base de la paroi intercalaire (27) la plus éloignée d'elle de façon à former une goulotte annulaire (9) au-dessous de l'extrémité inférieure (262) de la première paroi intercalaire (26), déterminant le changement de direction des gaz circulant entre les paroi et dans le fond de laquelle sont placées des buses (91) d'injection d'un gaz de reprise des particules solides se déposant dans la goulotte (9).

**Patentansprüche**

1. Vorrichtung zur Umwandlung und Rückgewinnung von Wärmeenergie mit einer zylindrischen Umwandlungskammer, die an einem Ende eine Einrichtung zur Erzeugung einer exothermen Reaktion aufweist, die Gase bei hoher Temperatur freisetzt und mit ihrem anderen Ende mit einer Rückgewinnungskammer in Verbindung steht, die ein Organ zur Rückgewinnung von Wärme aufweist, das aus wenigstens zwei koaxialen rohrförmigen Austauschflächen besteht, die einen zentralen Raum (20) und einen Ringraum (10) bilden, die in entgegengesetzter Richtung von Gasströmen durchströmt werden, wobei die Anordnung innerhalb einer äusseren Hülle (1) angeordnet ist, die dem Druck widerstehen kann und durch eine zylindrische Seitenwand (11) begrenzt ist, die an ihren Enden durch zwei Böden, einem oberen (12) und einem unteren (13), geschlossen ist, dadurch gekennzeichnet, dass die Umwandlungskammer den gesamten zentralen Raum (20) einnimmt, dessen durch die beiden Endöffnungen begrenzte Höhe der zur Entwicklung der Umwandlungsreaktion erforderlichen Strecke entspricht, und die vollständig von der im Ringraum (10) befindlichen Rückgewinnungskammer umgeben ist, wobei die Umwandlungskammer (20) mit der Rückgewinnungskammer (10) über einen kreisförmigen Zwischenraum (3) in Verbindung steht, in dem die Trennung der von den von der Umwandlung stammenden Gasen mitgenommenen Achse durch Umwandlung der Richtung des Gasstroms am Austritt der Umwandlungskammer (20) erfolgt.

2. Vorrichtung zur Umwandlung und Rückgewinnung von Energie nach Anspruch 1, dadurch gekennzeichnet, dass sie eine Einrichtung (18) aufweist zur Einspritzung eines gekühlten Gases in die Rückgewinnungskammer (10) zur Kontrolle der Temperatur der aus Vorrichtung austretenden Gase.

3. Vorrichtung zur Umwandlung und Rückgewinnung von Energie nach einem der Ansprüche 1 und 2, dadurch gekennzeichnet, dass die äussere Hülle eine senkrechte Achse hat, wobei die Mittel zur Erzeugung der Reaktion in Nähe des oberen Bodens (12) oben in der Umwandlungskammer (20) angeordnet sind, und dass die Rückgewinnungskammer (10) an ihrem Oberteil mit wenigstens einer Rohrleistung (14) versehen ist zur Entnahme der durch die Reaktion erzeugten Gase nach der Zirkulation von oben nach unten in der Umwandlungskammer (20) und von unten nach oben in der Rückgewinnungskammer (10).

4. Vorrichtung zur Umwandlung und Rückgewinnung von Energie nach einem der Ansprüche 1 und 2, dadurch gekennzeichnet, dass die äussere Hülle (1) eine senkrechte Achse hat, wobei die Mittel zur Erzeugung der Reaktion in Nähe des unteren Bodens (13) unten in der Umwandlungskammer (20) angeordnet sind, und dass die Rückgewinnungskammer (10) an ihrem Unterteil mit wenigstens einer Rohrleitung (14) versehen ist zur Entnahme der durch die Reaktion erzeugten Gase nach der Zirkulation von unten nach oben in der Umwandlungskammer (20) und von oben nach unten in der Rückgewinnungskammer (10).

5. Vorrichtung zur Umwandlung und Rückgewinnung von Energie nach einem der Ansprüche 1 bis 4, dadurch gekennzeichnet, dass der untere (13) der Hülle offen ist in Form eines Trichters zur Rückgewinnung der Asche.

6. Vorrichtung zur Umwandlung und Rückgewinnung von Energie nach einem der Ansprüche 3 und 5, dadurch gekennzeichnet, dass sie für die Asche eine geschlossene Kühlkammer (4) aufweist, die teilweise mit einem flüssigen Bad (41) gefüllt und unterhalb des unteren trichterförmigen Bodens (13) angeordnet ist, wobei die Kühlkammer zur Entleerung der Asche in ihrer Achse eine untere Öffnung (17) aufweist, die oberhalb des flüssigen Bads (41) mündet.

7. Vorrichtung zur Umwandlung und Rückgewinnung von Energie nach Anspruch 6, dadurch gekennzeichnet, dass sie wenistens eine Rampe (32) aufweist, die zur Besprengung mit einem Abschreckfluid in einer Richtung quer zum Aschenverlauf dient und am Austritt der Umwandlungskammer (20) über dem Flüssigen Bad (41) angeordnet ist.

8. Vorrichtung zur Umwandlung und Rückgewinnung von Energie nach einem der Ansprüche 6 und 7, dadurch gekennzeichnet, dass die Kühlkammer (4) an ihrem Oberteil mit einer Öffnung (43) versehen ist zur Entleerung eines Teils der Gase, die aus der Umwandlungskammer (20) austreten und zusammen mit der Asche in die Kühlkammer (4) strömen.

9. Vorrichtung zur Umwandlung und Rückgewinnung von Energie nach Anspruch 8, dadurch gekennzeichnet, dass die untere Entleerungsöffnung (17) nach unten durch ein Rohr (33) verlängert ist, dass sich in der Achse der Kühlkammer erstreckt und dessen unteres Ende in das flüssige Bad (41) eintaucht.

10. Vorrichtung zur Umwandlung und Rückgewinnung von Energie nach Anspruch 5, dadurch gekennzeichnet, dass das Unterteil des unteren trichterförmigen Bodens (13) mit einem flüssigen Bad (41) gefüllt ist.

11. Vorrichtung zur Umwandlung und Rückgewinnung von Energie nach Anspruch 4, dadurch gekennzeichnet, dass die Innenwand (2) an ihrem Unterteil durch einen trichterförmigen Boden (50) verschlossen und auf ihrer Innenseite mit einer Verengung versehen ist, die einen Hals (27') zum Halten der Achse bildet, wobei der Raum zwischen dem Boden (50) und dem Hals (27') eine Reaktionskammer (5) bildet, in die ein Brenner (51) mündet, wobei die Umwandlungsreaktion über dem Hals (27') bis zum Austritt aus der Umwandlungskammer (20) stattfindet.

12. Vorrichtung zur Umwandlung und Rückgewinnung von Energie nach Anspruch 4, dadurch gekennzeichnet, dass die Reaktion in einer Wirbelschicht stattfindet, die oberhalb einer Kammer (6) ausgebildet ist, die in der Mitte des unteren Bodens (13) der Hülle (1) angeordnet und durch eine zylindrische Wand (61) begrenzt ist, die unter und in der Verlängerung der Innenwand (2) angeordnet ist.

13. Vorrichtung zur Umwandlung und Rückgewinnung von Energie nach Anspruch 10 und 12, dadurch gekennzeichnet, dass der untere Boden (13) der äusseren Hülle (1) um die Reaktionskammer (6) einen Ringraum (35) bildet, der unter der Rückgewinnungskammer (10) einen mit einer Flüssigkeit gefüllten Trog (41) bildet zur Rückgewinnung der mit den Gasen mitgenommenen Asche.

14. Vorrichtung zur Umwandlung und Rückgewinnung von Energie nach Anspruch 12, dadurch gekennzeichnet, dass das untere Ende der Innenwand (2) sich nach unten erweitert und zur Führung der Gase über der Reaktionskammer (6) einen Abzug (7) bildet, dessen unterer Rand vom unteren Boden (13) der äusseren Hüller (1) durch einen kreisförmigen Zwischenraum (3) getrennt ist und der mit dem unteren Boden (13) einen ringförmigen Trichter (31) zur Rückgewinnung der Asche bildet, die beim Durchtritt durch den kreisförmigen Zwischenraum (3) in die Wirbelkammer (6) rezirkuliert wird.

15. Vorrichtung zur Umwandlung und Rückgewinnung von Energie nach Anspruch 5 und 12, dadurch gekennzeichnet, dass die Wirbelkammer (6) auf dem Boden des durch den unteren Boden (13) gebildeten Trichters angeordnet ist, der sich nach oben an den unteren Rand der Seitenwand (11) der Hülle (1) und nach unten an den oberen Rand der zylindrischen Wand (61) der Wirbelkammer (6) anschliesst.

16. Vorrichtung zur Umwandlung und Rückgewinnung von Energie nach Anspruch 14, dadurch gekennzeichnet, dass sich der Abzug (7) zur Führung der Gase nach oben erweitert und dann an eine zylindrische Wand (71) anschliesst, die in einem gewissen Abstand die zylindrische Wand (61) der Wirbelkammer (6) bis zu einer Höhe umgibt, die unter deren oberen Rand liegt, um einen zur Reaktionskammer (6) gerichteten schikanenförmigen Verlauf zur Umlenkung eines Teils der Gase zu bilden, die von der Wärmerückgewinnungskammer (10) kommen und zusammen mit der Asche den kreisförmigen Zwischenraum (3) durchströmt haben.

17. Vorrichtung zur Umwandlung und Rückgewinnung von Energie nach einem der vorhergehenden Ansprüche, dadurch gekennzeichnet, dass die Innenwand (2) auf ihrer zur Rückgewinnungskammer gewandten Aussenseite durch ein Bündel (25) von aneinanderliegenden Rohren gebildet ist, die von einem Wärmeübertragungsfluid durchströmt werden, wobei die zur Reaktionskammer gewandte Innenseite von einem an den Rohren (25) befestigten hitzefesten Überzug (26') bedeckt ist.

18. Vorrichtung zur Umwandlung und Rückgewinnung von Wärmeenergie nach einem der Ansprüche 1 bis 17, dadurch gekennzeichnet, dass die Innenwand (2) und die Seitenwand (11) der Hülle (1) an ihren oberen und unteren Enden durch rohrförmige Platten (87) gebildet ist, die mit den oberen (12) und unteren (13) Böden zwei Kammern begrenzen, die durch ein Bündel von Rohren (86) miteinander verbunden sind, die von den durch die Reaktion erzeugten Gasen durchströmt werden und in Längsrichtung innerhalb des Ringraums (10) angeordnet sind, der eine geschlossene Kammer (89) bildet, die von einem Wärmeübertragungsfluid durchströmt wird, in das die Rohre (86) des Bündels eintauchen.

19. Vorrichtung zur Umwandlung und Rückgewinnung von Energie nach den vorhergehenden Ansprüchen, dadurch gekennzeichnet, dass der die Rückgewinnungskammer bildende Ringraum (10) in wenigstens zwei koaxiale Räume durch eine Zwischenwand (26, 27) unterteilt ist, die die Innenwand umgibt und innerhalb der Rückgewinnungskammer (10) einen schikanenförmigen Verlauf bildet, der sich längs der Zwischenwände (26, 27) erstreckt, wenn man sich in den koaxialen Räumen aufeinanderfolgend in der einen und dann in der anderen Richtung bewegt.

20. Vorrichtung zur Umwandlung und Rückgewinnung von Energie nach Anspruch 19, dadurch gekennzeichnet, dass sie eine erste und eine zweite koaxiale Zwischenwand (26 und 27) aufweist, die die Innenwand (2) umgeben, dass die Wirbelkammer (6) am Unterteil der Innenwand (2) angeordnet ist und dass diese mit der Basis der von ihr am weitesten entfernten Zwischenwand (27) derart verbunden ist, dass unter dem unteren Ende (262) der ersten Zwischenwand (26) eine ringförmige Rinne (9) gebildet ist, die die Richtungsänderung der zwischen den Wänden zirkulierenden Gase bestimmt und in deren Grund Düsen (91) zur Einspritzung eines Gases angeordnet sind zur Wiederaufnahme von sich in der Rinne (9) absetzenden festen Teilchen.

**Claims**

1. A device for converting and recovering thermal energy comprising a conversion chamber of cylindrical shape provided at one end with means for producing an exothermic reaction giving off gases at high temperature and communicating at its other end with a recovering chamber comprising a heat recovering structure constituted by at least two coaxial tubular exchange surfaces defining a central space (20) and an annular space (10) through which travel in opposite directions gas currents, the assembly being placed inside an outer container (1) capable of resisting pressure and defined by a cylindrical lateral wall (11) closed at its ends by an upper end wall (12) and a lower end wall (13), characterised in that the conversion chamber occupies the whole of the central space (20) whose height defined by the two end orifices corresponds to the distance required for the development of the conversion reaction and is completely surrounded by the recovering chamber placed in the annular space (10), the conversion chamber (20) communicating with the recovering chamber (10) through a circular gap (3) in which is produced the separation of the ashes entrained with the gases issuing from the conversion by inversion of the direction of the gaseous current at the outlet of the conversion chamber (20).

2. A device for converting and recovering energy according to claim 1, characterised in that it comprises means (18) for injecting, inside the recovering chamber (10), a cooled gas for controlling the temperature of the gases issuing from the device.

3. A device for converting and recovering energy according to claim 1 or 2, characterised in that the outer container (1) has a vertical axis and the means for producing the reaction are placed in the vicinity of the upper end wall (12), in the upper part of the conversion chamber (20) and the recovering chamber (10) is provided, in its upper part, with at least one pipe (14) for discharging the gases produced by the reaction after circulation in the downward direction in the conversion chamber (20) and in the upward direction in the recovering chamber (10).

4. A device for converting and recovering energy according to claim 1 or 2, characterised in that the outer container (1) has a vertical axis and the means for producing the reaction are placed in the vicinity of the lower end wall (13) at the base of the conversion chamber (20) and the recovering chamber (10) is provided in its lower part with at least one pipe (14) for discharging the gases produced by the reaction, after circulation in the upward direction in the conversion chamber (20) and in the downward direction in the recovering chamber (10).

5. A device for converting and recovering energy according to one of the claims 1 to 4, characterised in that the lower end wall (13) of the container is open in the form of a ash-recovering hopper.

6. A device for converting and recovering energy according to claim 3 and 5, characterised in that comprises a closed chamber (4) for cooling the ashes, partly filled with a liquid bath (41) and placed below the lower end wall (13) in the form of a hopper, the latter being provided on its axis with a lower orifice (17) for discharging the ashes and opening out above the liquid bath (41).

7. A device for converting and recovering energy according to claim 6, characterised in that it comprises at least one spraying system (32) for a soaking fluid in a direction transverse to the path of the ashes and placed at the outlet of the conversion chamber (20) above the bath of liquid (41).

8. A device for converting and recovering energy according to one of the claims 6 and 7, characterised in that the cooling chamber (4) is provided in its upper part with an orifice (43) for discharging a part of the gases issuing from the conversion chamber (20) and passing with the ashes into the cooling chamber (4).

9. A device for converting and recovering energy according to claim 8, characterised in that the lower orifice (17) for discharging is downwardly extended by a tube (33) extending along the axis of the cooling chamber and having a lower end immersed in the bath of liquid (41).

10. A device for converting and recovering energy according to claim 5, characterised in that the lower part of the lower end wall (13) in the form of a hopper is filled with a liquid bath (41).

11. A device for converting and recovering energy according to claim 4, characterised in that the inner wall (2) is closed in its lower part by an end wall (50) in the form of a hopper provided at its centre with an orifice (52) for discharging the ashes and is provided on its inner side with a constriction forming a neck (27) for maintaining the ashes, the space between the end wall (50) and the neck (27) constituting a reaction chamber (5) onto which opens a burner (51), the conversion reaction being continued above the neck (27) up to the outlet of the conversion chamber (20).

12. A device for converting and recovering energy according to claim 4, characterised in that the reaction is produced in a fluidized bed formed inside a chamber (6) placed at the centre of the lower end wall (13) of the container (1) and defined by a cylindrical wall (61) disposed below and in the extension of the inner wall (2).

13. A device for converting and recovering energy according to claim 10 and 12, characterised in that the lower end wall (13) of the outher container (1) forms around the reaction chamber (6) an annular space (35) constituting below the recovering chamber (10) a tank filled with a liquid (41) for recovering the ashes entrained with the gases.

14. A device for converting and recovering energy according to claim 12, characterised in that the lower end of the inner wall (2) is downwardly divergent and forms above the reaction chamber (6) a gas guiding hood (7) whose lower edge (21) is spaced from the lower end wall (13) of the outer case (1) by a circular gap (3) and which forms with said lower end wall (13) an annular hopper (31) for recovering the ashes, the latter being re-cycled in the fluidization chamber (6) in passing through the circular gap (3).

15. A device for converting and recovering energy according to claims 5 and 12, characterised in that the fluidization chamber (6) is placed at the bottom of the hopper formed by the lower end wall (13), the hopper being connected, adjacent the upper end, to the lower edge of the lateral wall (11) of the container (1) and, adjacent the lower end, to the upper edge of the cylindrical wall (61) of the fluidization chamber (6).

16. A device for converting and recovering energy according to claim 14, characterised in that the gas guiding hood (7) is upwardly divergent and is then connected to a cylindrical wall (71) surrounding at a certain distance the cylindrical wall (61) of the fluidization chamber (6) to a level lower than the upper edge of the fluidization chamber so as to form a baffle path returning to the reaction chamber (6) a part of the gases coming from the heat recovering chamber (10) and having passed through the circular gap (3) with the ashes.

17. A device for converting and recovering energy according to one proceding claims, characterised in that the inner wall (2) is constituted on its outer side facing the recovering chamber by a bundle (25) of adjoining tubes through which a heat-carrying fluid travels, the inner side facing the reaction chamber being covered with a refractory lining (26') fixed to the tubes (25).

18. A device for converting and recovering energy according to one of the claims 1 to 17, characterised in that the inner wall (2) and the lateral wall (11) of the container (1) are connected at their upper and lower ends by tube plates (87) respectively defining with the upper end wall (12) and lower end wall (13) two chambers which are interconnected by a bundle of tubes (86) through which travel the gases produced by the reaction and which are disposed longitudinally inside the annular space (10), the latter constituting a closed chamber (89) through which flows a heat-carrying fluid in which the tubes of the bundle (86) are immersed.

19. A device for converting and recovering energy according to the preceding claims, characterised in that the annular space (10) constituing the recovering chamber is divided into at least two coaxial spaces By at least one interposed wall (26) 37 surrounding the inner wall and defining inside the recovering chamber (10) a baffle path alongside said interposed walls (26, 27) by extending successively in said coaxial spaces in one direction and then in the other.

20. A device for converting and recovering energy according to claim 19, characterised in that it comprises a first interposed wall (26) and a second interposed wall (27) which are coaxial und surround the inner wall (2), the fluidization chamber (6) is placed in the lower part of the inner wall (2) and the latter is connected to the base of the interposed wall (27) the most remote therefrom so as to form an annular trough (9) below the lower end (262) of the first interposed wall (26) determining the change in direction of the gases flowing between the walls and in the bottom of which are placed injection nozzles (91) for a gas for taking up solid particles deposited in the trough (9).

Fig 1

Fig 2

Fig 3

Fig 4

Fig 5

Fig 6

Fig 7

Fig 8

Fig 9

Fig 10a

Fig 10b